# EUROPEAN PATENT SPECIFICATION

(11) **EP 4 485 674 B1**
(45) Date of publication and mention of the grant of the patent: **09.12.2026**
(21) Application number: 23788443.2
(22) Date of filing: 27.01.2023
(51) Int. Cl.: H01M 50/531, H01M 50/534, H01M 50/533, H01M 50/105, H01M 50/178, H01M 50/557, H01M 50/124, H01M 50/172, H01M 50/55

(54) **POUCH BATTERY CELL INCLUDING THERMAL INSULATOR COVERING CONNECTION PORTION OF ELECTRODE TAB AND ELECTRODE LEAD**
POUCH BATTERIEZELLE MIT ISOLIERMATERIAL ABGEDECKTES ANSCHLUSSBEREICH DER ELEKTRODENLASCHE UND DER ELEKTRODENLEITUNG
CELLULE DE BATTERIE DE TYPE POUCH COMPRENANT UN ISOLANT THERMIQUE RECOUVRANT LA PARTIE DE CONNEXION DE LA LANGUETTE D'ÉLECTRODE ET DU FIL D'ÉLECTRODE

(30) Priority: 15.04.2022 KR 20220046974
(43) Date of publication of application: 01.01.2025
(73) Proprietor: LG Energy Solution, Ltd., Seoul 07335 (KR)
(72) Inventor: KWON, Myung Bin, Daejeon 34122 (KR)
(74) Representative: Goddar, Heinz J.
(86) International application number: PCT/KR2023/001277
(87) International publication number: WO 2023/200088

(56) References cited:
- JP-A- 2013 012 343
- KR-A- 20060 124 036
- KR-A- 20080 040 822
- KR-A- 20090 077 420
- KR-A- 20120 134 341
- KR-A- 20140 032 739
- KR-A- 20170 100 134
- KR-A- 20190 112 429

## Description

### CROSS-REFERENCE TO RELATED APPLICATIONS

This application claims the benefit of priority to Korean Patent Application No. 10-2022-0046974, filed on April 15, 2022 in the Republic of Korea.

### TECHNICAL FIELD

The present disclosure relates to a pouch battery cell including an electrode assembly, an electrode tab, an electrode lead, and a pouch.

### BACKGROUND

A secondary battery, which has high applicability according to a product group and an electrical property such as high energy density, is widely applied to not only a portable device, but also an electric vehicle (EV) or a hybrid electric vehicle (HEV), which is driven by an electrical driving source.

Since the secondary battery has the primary advantage of remarkably reducing the use of fossil fuel, as well as the advantage of not generating by-products according to the use of energy at all, the secondary battery is attracting attention as a new energy source for eco-friendly and energy efficiency improvement.

Currently widely used secondary batteries include lithium ion batteries, lithium polymer batteries, nickel cadmium batteries, nickel hydrogen batteries, nickel zinc batteries, and the like. An operating voltage of a unit secondary battery cell, i.e., a unit battery cell, ranges from about 2.5 V to about 4.5 V. Accordingly, when a higher output voltage is required, a plurality of battery cells may be connected in series to configure a battery pack. In addition, according to a charge/discharge capacity required for the battery pack, a plurality of battery cells may be connected in parallel to configure a battery pack. Accordingly, the number and electrical connection type of battery cells included in the battery pack may be variously set according to the required output voltage or charge/discharge capacity.

Meanwhile, in general, secondary batteries are classified into cylindrical batteries and prismatic batteries in which an electrode assembly is built in a cylindrical or prismatic metal can, and pouch-type batteries in which the electrode assembly is built in a pouch-type case of an aluminum laminate sheet depending on the shape of a battery case, and the electrode assembly built in the battery case is formed in a structure including a positive electrode, a negative electrode, and a separator interposed between the positive and the negative electrodes, is a power generating element capable of charging and discharging, and is classified into a jelly-roll type electrode assembly wound with a separator interposed between a positive electrode and a negative electrode, which are long sheet-shaped and are coated with active materials, and a stack-type electrode assembly in which a plurality of positive electrodes and negative electrodes of a predetermined size are sequentially stacked while a separator is interposed therebetween.

Among these, the stack-type and pouch-type batteries are gradually increasing in use as the capacity of batteries increases and thus interest in a case that can be processed into a large area and a thin material increases.

FIG. 1 illustrates a plan view of a typical pouch battery cell. Referring to this, in the pouch battery cell, electrode leads 12 of a negative electrode and a positive electrode protrude to the outside of a pouch 10, and the pouch 10 is sealed on a lead film 13 surrounding a portion of the electrode lead 12.

FIG. 4 is a cross-sectional view illustrating a state in which a metal portion 41 formed of the electrode tab 14 and the electrode lead 12 and an inner insulating layer 30a provided in the pouch are adhered in the pouch battery cell.

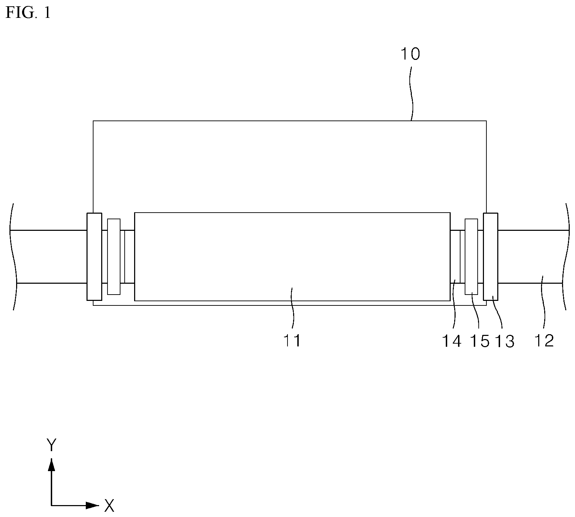

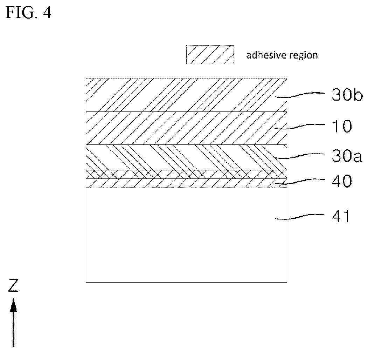

Referring to FIGS. 1 and 4, when the metal portion 41 comes into contact with the inner insulating layer 30a of the pouch, adhesion of the metal portion 41 and the inner insulating layer 30a of the pouch may occur due to the heat applied to the pouch 10 and the lead film 13 and conducted to the metal portion 41 through the electrode lead 12 during the sealing process. When the electrode assembly 11 and the metal portion 41 move after such adhesion occurs, there is a problem that disconnection may occur in the inner insulating layer 30a of the pouch, which may cause the insulating performance of the pouch battery cell to degrade.

Referring to FIG. 1, in the conventional pouch battery cell, the electrode tab 14 and the electrode lead 12 are connected through welding, and a welding tape 15 is attached to the welded portion to prevent an inner surface of the pouch from being damaged by a sharp bead caused by the welding. However, the welding tape 15 has no thermal insulation performance, and thus it has not been possible to prevent the phenomenon in which the heat conducted through the metal portion 41 melts the inner insulating layer 30a and causes adhesion.

JP 2013 012343 A discloses a case having an internal space for accommodating an electrode body and an electrolyte, and having two opposing sealed surfaces along the edges of the space, the space being sealed by bonding the sealed surfaces; tabs extending from each of the positive and negative electrode plates; leads electrically connected to the tabs at the sealed surfaces or in the space, one end or a middle portion of which is sandwiched between the two sealed surfaces and the other end of which protrudes outside the case; and insulating seal portion covering both sides of the leads near the end faces of the two sealed surfaces and bonding the two sealed surfaces together; and a protective layer covering at least a portion of the surface of the leads near the one end.

KR 2019 0112429 A discloses an electrode assembly comprising an electrode tab protruding from one side of an electrode; an electrode lead connected to the electrode tab and transmitting electricity generated by the electrode to the outside; and a protective tape attached to the upper or lower surface of a connecting portion where the electrode tab and the electrode lead are connected to each other.

KR 2014 0032739 A discloses a secondary battery having an electrode assembly and a battery case, characterized in that it comprises: one or more electrode tabs formed to protrude from the electrode assembly; an electrode lead having one end attached to the electrode tab at a lower portion of the electrode tab and the other end exposed to the outside of the battery case; and a cover tape covering an end of the electrode tab at an upper portion of the electrode tab and folding to surround a side portion of the electrode lead, the cover tape having an adhesive surface such that at least a portion of the adhesive surface is adhered to a lower surface of the electrode lead.

### SUMMARY

### Technical Problem

The present disclosure is conceived in view of the aforementioned problem of the related art, and an object thereof is to provide an improved pouch battery cell capable of preventing conduction of heat by providing a thermal insulator instead of a welding tape on a metal layer inside a pouch to prevent adhesion between a metal portion and an inner insulating layer.

Another object of the present disclosure is to achieve prevention of damage to an inner surface of a pouch due to a bead of a welded portion, which is conventionally performed by a welding tape, with a thermal insulator.

Still another object of the present disclosure is to exhibit a thermal insulating effect as much as possible within a range in which interference between an electrode assembly or a lead film and a thermal insulator does not occur, by appropriately selecting the shape and range of the thermal insulator covering a metal portion.

Yet another object of the present disclosure is to provide a pouch battery cell having an improved structure, a battery pack including the same, and an electronic device including the battery pack.

Aspects according to the present disclosure are not limited to the above ones, and other aspects and advantages that are not mentioned above may be clearly understood from the following description and may be more clearly understood from the aspects set forth herein. Additionally, the aspects and advantages in the present disclosure may be realized via means and combinations thereof that are described in the appended claims.

### Technical Solution

The invention is set out in the appended claims. In order to achieve the above-described objective, the present disclosure provides a pouch battery cell structure configured to cover a portion, which may come into contact with an inner insulating layer of a pouch, of a surface of a metal portion connected to an electrode assembly accommodated in the pouch with a thermal insulator, and a shape of the thermal insulator.

In addition, in order to achieve the above-described objective, the present disclosure defines a range in which the thermal insulator covers the metal portion.

These technical solutions may be applied to a pouch-type battery cell in which an electrode lead is connected to an electrode tab connected to an electrode assembly, and a pouch having an insulating layer accommodates a portion of the electrode lead, the electrode tab, and the electrode assembly to be sealed.

The electrode tab and the electrode lead may be connected to each other to form a metal portion.

The thermal insulator directly or indirectly covers at least a portion of a portion of the metal portion between the electrode assembly and the lead film.

The thermal insulator may cover not only the metal portion but also a welding tape attached to the metal portion or the like. That is, the present disclosure does not exclude the use of the welding tape. The thermal insulator may also perform the function of the welding tape, and in some cases, the welding tape may be used and the thermal insulator may be further used.

The thermal insulator may include any one material selected from the group consisting of foamed synthetic resin, glass fiber, rock wool, mica, perlite, vermiculite, and cellulose. However, the thermal insulator is not limited thereto and any material may be used as long as the thermal insulator can exhibit thermal insulation performance.

The thermal insulator may be a thermal insulating film.

The thermal insulator may be a thermal insulating film attached to both surfaces of the metal portion.

The thermal insulator may be a thermal insulating film having a width greater than a width of the metal portion and attached to the metal portion or to each other. (In this case, the width of each of the thermal insulator and the metal portion refers to a length in a direction parallel to the entire pouch battery cell and perpendicular to a length direction, when a direction from the electrode assembly to the electrode leads through the electrode tab is referred to as the length direction.)

The thermal insulator may be a thermal insulating film having a shape surrounding the metal portion with a length direction of the metal portion as an axis.

The thermal insulating film may be a thermal reflective film coated with a metal thin film by a sputtering method. However, the thermal insulating film is not limited thereto, and may be manufactured by any method and in any structure as long as it is capable of exhibiting thermal insulation performance.

The thermal insulator may cover 50% or more of a surface area of a portion between the electrode assembly and the lead film in order to achieve a sufficient thermal insulating effect.

The thermal insulator is spaced apart from the electrode assembly by 2 mm or more to avoid interference with the electrode assembly.

The thermal insulator may be spaced apart from the lead film by 2 mm or more so that the lead film may be smoothly fused and to avoid interference with the lead film.

When the electrode tab and the electrode lead are connected through welding, the thermal insulator may cover the welded portion in order to prevent an inner surface of the pouch from being damaged from a sharp bead of the welded portion.

The thermal insulator may cover a connection portion of the electrode tab and the electrode lead to prevent any roughness that may be present at the connection portion from damaging the inner surface of the pouch.

In one aspect of the present disclosure, the metal portion may be provided with an electrode tab and an electrode lead connected by welding, the thermal insulator may have a width greater than a width of the metal portion, and the thermal insulator may be a thermal insulating film attached to both surfaces of the metal portion in a region covering the metal portion and attached to each other at a portion larger than the width of the metal portion, and covering 50% or more of an area of a portion of the metal portion between the electrode assembly and the lead film including a welded portion.

Meanwhile, the present disclosure provides a pouch-type secondary battery, a battery pack including the pouch-type secondary battery, and an electronic device including the battery pack as a power source.

The electronic device may be selected from, for example, a computer, a mobile phone, a wearable electronic device, a power tool, an electric vehicle (EV), a hybrid electric vehicle, a plug-in hybrid electric vehicle, an electric two-wheeled vehicle, an electric golf cart, or a power storage system.

The structures and manufacturing methods of the electronic devices are known in the art, and thus detailed descriptions thereof will be omitted herein.

### Advantageous Effects

According to the present disclosure, a phenomenon in which heat conducted to a metal portion through an electrode lead in a high temperature and high pressure sealing process is transferred to an inner surface of a pouch can be minimized by covering all or a portion of the metal portion with a thermal insulator. Accordingly, a phenomenon can be prevented in which insulating performance is reduced as an insulating layer inside the pouch is melted to be adhered to a metal layer or the corresponding insulating layer is destructed. That is, the present disclosure can provide a pouch battery cell with improved stability of insulating performance.

In addition, according to another aspect of the present disclosure, a welding tape that is attached to prevent damage to an inner surface of a pouch caused by a bead of a welded portion can be omitted, and a thermal insulator configured to cover a metal portion to prevent heat of the metal portion from being transferred to the inner surface of the pouch also performs a function the conventional welding tape, so that it is economical in a production process.

According to still another aspect of the present disclosure, a thermal insulating film is employed as the thermal insulator, so that it is economical to use the equipment for attaching the existing welding tape.

According to yet another aspect of the present disclosure, by providing a clearance dimension between a thermal insulator and an electrode assembly or a lead film, interference between the thermal insulator and the electrode assembly or the lead film can be excluded.

In addition to the above effects, various other effects may be produced according to the present disclosure.

### BRIEF DESCRIPTION OF THE DRAWINGS

FIG. 1 is a plan view of a typical pouch battery cell not including a thermal insulator.

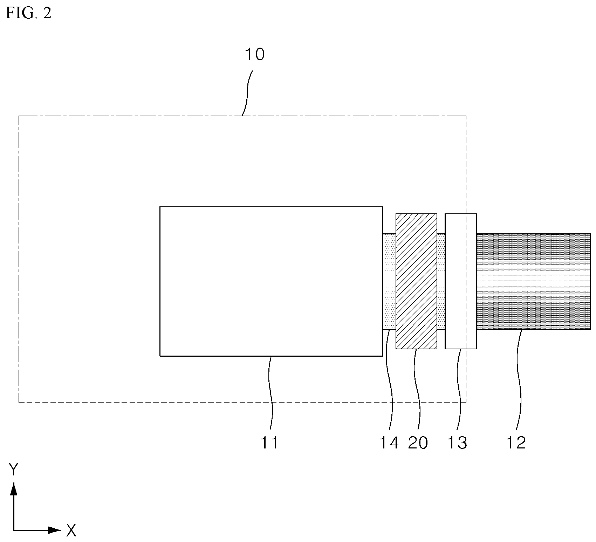

FIG. 2 is a plan view of a portion in which sealing is performed.

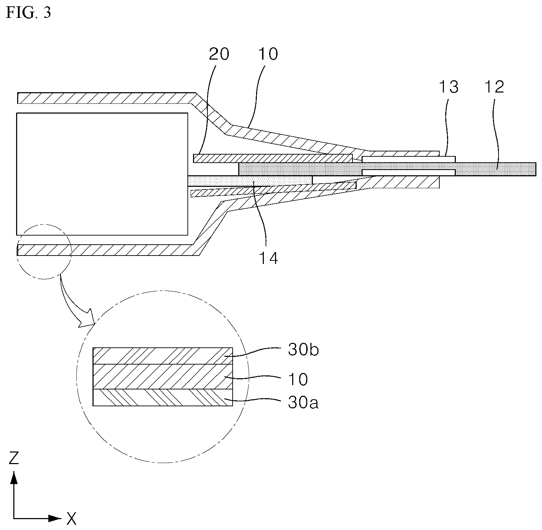

FIG. 3 is a cross-sectional view of the portion in which the sealing is performed.
FIG. 4 is a cross-sectional view illustrating a state in which a metal portion and an inner insulating layer are adhered in the conventional pouch battery cell not including the thermal insulator.

### DETAILED DESCRIPTION

Description of Reference Numerals used in the present disclosure are as follows:
10: pouch
11: electrode assembly
12: electrode lead
13: lead film
14: electrode tab
15: welding tape
20: thermal insulator/thermal insulating film
30a: inner insulating layer
30b: external insulating layer
40: adhesive region
41: metal portion
X: width direction
Y: length direction
Z: height direction

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred aspects according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower portion)" or "on (or under)" another component, any one component can be directly on (or under) another component, but an additional component can be interposed between any one component and another component on (or under) any one component.

When any one component is described as being "jointed", "coupled", or "connected" to another component, any one component can be directly connected or coupled to another component, but an additional component can be "interposed" between the two components or the two components can be "jointed", "coupled", or "connected" by an additional component.

The singular expressions are intended to include the plural expressions as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

For convenience of description, in the present specification, a direction extending from an electrode assembly to an electrode lead through an electrode tab is referred to as a length direction Y. In addition, a direction perpendicular to the length direction and parallel to the entire pouch battery cell in a lying-down state is referred to as a width direction X. In addition, a direction perpendicular to the entire pouch battery cell in the lying-down state is referred to as a height direction Z.

Hereinafter, exemplary aspect of the present disclosure will be described with reference to the accompanying drawings.

FIG. 1 is a plan view of a typical pouch battery cell not including a thermal insulator.

Referring to FIG. 1, the typical pouch battery cell includes an electrode assembly 11, an electrode tab 14 connected to the electrode assembly 11, an electrode lead 12 connected to the electrode tab 14, a lead film 13 surrounding the electrode lead, and a pouch 10 sealed by being fused onto the lead film 13.

The electrode assembly 11 has a structure in which an electrode plate (a positive electrode plate and a negative electrode plate) coated with an active material on one surface or both surfaces thereof is stacked multiple times with a separator interposed therebetween. The electrode tab 14 may include a positive electrode tab connected to the positive electrode plate and a negative electrode tab connected to the negative electrode plate.

The electrode tab 14 may be formed by a portion of the electrode plate, which is not coated with the active material and extends to protrude to the outside from the stacked structure of the electrode plate and the separator. Portions extending from the stacked plurality of electrode plates may overlap each other to form the electrode tabs 14.

Both the electrode tab 14 and the electrode lead 12 may be made of an electrically conductive metal material. Accordingly, the electrode tab 14 and the electrode lead 12 may be connected by stacking end portions thereof, which face each other, in the height direction so that some portions overlap in the length direction, and then welding those portions together.

There is a possibility that a weld bead may be generated at the welded portion, which may damage an inner surface of the pouch, which will be described below. Accordingly, welding tapes 15 may be attached to both surfaces of the welded portion as necessary. According to the present disclosure, a structure in which a thermal insulator 20 to be described below covers the metal portion 41 is provided, and thus the thermal insulator 20 may also perform the function of the welding tape 15. Accordingly, the welding tape 15 may be omitted.

FIGS. 2 and 3 are a plan view and a cross-sectional view of a portion of the pouch battery cell, in which the thermal insulator 20 covers a portion of the metal portion 41 and sealing is performed, respectively.

FIGS. 2 and 3 illustrate a portion where the sealing is performed. FIG. 2 is a plan view of the portion in which the sealing is performed, and FIG. 3 is a cross-sectional view of the portion in which the sealing is performed. Referring to this, an electrode tab 14 connected to an electrode assembly 11 is connected to the electrode lead 12, and the pouch 10 is pressed and heated with a sealing tool on the lead film 13 surrounding a portion of the electrode lead 12, and thus the portion of the electrode lead 12, the electrode tab 14, and the electrode assembly 11 are accommodated in the pouch.

Referring to FIGS. 2 and 3, the pouch 10 may be manufactured as a sheet including a metal material layer and an insulating layer 30 coated on a surface and a rear surface of the metal material layer. The metal material layer serves as a barrier for electromagnetically isolating the electrode assembly 11, and the insulating layer 30 electrically insulates an inner space of the pouch from an outer space of the pouch.

The insulating layer 30 may include a polypropylene (PP) material.

The pouch 10 may be made of a flexible material.

The pouch 10 is formed by folding the sheet to accommodate the electrode assembly 11 therein, and sealing and attaching edge portions of the sheet, which face each other due to folding of the sheet, by pressing and heating. The electrode lead 12 extends further out of the pouch through the sealingly attached portion of the edge of the pouch 10.

The lead film 13 is provided in a region in which the electrode lead 12 passes through the sealed portion of the edge of the pouch 10. A pair of lead films 13 are attached to an upper surface and a lower surface of the electrode lead 12, respectively, and are laminated on both sides of the electrode lead 12 and further extend laterally. An extension direction of the lead film 13 attached to the electrode lead 12 corresponds to an extension direction of the edge of the pouch.

When the two edge portions of the pouch are heated and pressed by a sealing tool in a state in which the electrode lead 12 and the lead film 13 are interposed, the lead film 13 and the edge portion of the pouch are fused and sealed.

FIG. 4 is a cross-sectional view illustrating a state in which the metal portion 41 and the inner insulating layer 30a are adhered in the pouch battery cell not including the thermal insulator.

Referring to FIG. 4, in the sealing process of the pouch 10, heat transferred to the metal portion 41 through a portion of the electrode lead 12 may be transferred to an inner surface of the pouch 10, which is positioned closer to an inner space of the pouch than the sealed portion. Accordingly, a phenomenon may occur in which the insulating layer 30 on the inner surface of the pouch 10 is melted and adhered to the metal portion 41.

In this case, the insulating layer 30 adhered to the metal portion 41 may subsequently be disconnected when the metal portion 41 or the like is moved, thereby lowering the insulating performance of the pouch battery cell.

Accordingly, referring to FIGS. 2 and 3, the present disclosure provides the pouch battery cell including the thermal insulator 20 that covers at least a portion of a surface area of a portion of the metal portion 41, which includes the electrode tab 14 and the electrode lead 12, between the electrode assembly 11 and the lead film 13. Accordingly, a concern that heat is transferred from the metal portion 41 to the inner insulating layer 30a during sealing to cause the inner insulating layer 30a to be melted may be reduced, and thus the deterioration of the insulating performance may be prevented.

The thermal insulator 20 may be applied to the metal portion 41 before the electrode assembly 11 is accommodated in the pouch 10.

Hereinafter, the shape and range in which the thermal insulator 20 covers the metal portion 41 will be described.

The term "covers" described above includes a case in which heat of the metal portion 41 can be blocked from the inner insulating layer 30a of the pouch as in a case in which the thermal insulator 20 is in contact with the metal portion 41 by being directly attached to the metal portion 41, as well as a case in which the thermal insulator 20 indirectly covers the metal portion 41 by surrounding the metal portion 41 with an air layer or covering the welding tape 15 or the like directly attached to the metal portion 41 as shown in FIG. 1.

Referring to FIGS. 2 and 3, the thermal insulator 20 may be a thermal insulating film. By using the thermal insulating film 20 in the form of a tape, the effect of the present disclosure may be sufficiently realized by replacing the welding tape 15 with the thermal insulating film 20 in a process of attaching the existing welding tape 15, as shown in FIG. 1.

Referring again to FIGS. 2 to 3, tn the case of covering the metal portion 41 with the thermal insulating film 20, the thermal insulating film 20 may be attached to both sides of the metal portion 41. In this case, when a width (a length in the X-direction) of the thermal insulating film 20 is greater than a width of the metal portion 41, the entire perimeter of the metal portion 41 can be covered with the thermal insulating film 20.

The thermal insulating film 20 may cover the metal portion 41 in a shape surrounding the metal portion 41 with the length direction (Y direction) of the metal portion 41 as an axis. At this time, the thermal insulating film 20 may surround the perimeter of the metal portion 41 one or more times, and may surround the perimeter of the metal portion 41 two or more times in order to increase the insulating function of the thermal insulating film 20.

The thermal insulator 20 may cover 50% or more of a surface area of a portion between the electrode assembly 11 and the lead film 13 in order to achieve a sufficient thermal insulating effect.

Referring to FIGS. 2 and 3 again, when the thermal insulator 20 is positioned too close to the electrode assembly 11 adjacent thereto, interference with the electrode assembly 11 may occur. Thus, in order to avoid the interference with the electrode assembly 11, the thermal insulator 20 is positioned apart from the electrode assembly 11 by a predetermined interval. The interval is 2 mm or more. When the interval is less than 2 mm, this increases the likelihood that the thermal insulator 20 interferes with the electrode assembly 11 during handling of the battery cell. The interval is 5 mm or less. When the interval exceeds 5 mm, the likelihood of interference with the electrode assembly 11 is no longer reduced, and only thermal insulation performance is lowered.

Further, referring to FIGS. 2 and 3 again, when the thermal insulator 20 is positioned too close to the lead film 13, interference with the lead film 13 may occur. Since the lead film 13 serves to seal the pouch 10 by being fused by heat and pressure, there is a concern that sealing performance is reduced when the thermal insulator 20 is disposed too close to the lead film 13. Accordingly, the thermal insulator 20 may be positioned apart from the lead film 13 by a predetermined interval. The interval may be 2 mm or more. When the interval is less than 2 mm, the likelihood of affecting the sealing is increased.

The thermal insulator 20 may cover a connection portion of the electrode tab 14 and the electrode lead 12 to prevent any roughness that may be present at the connection portion from damaging the inner surface of the pouch 10. In particular, when the electrode tab 14 and the electrode lead 12 are connected through welding, the thermal insulator 20 may be positioned to cover the welded portion in order to prevent the inner surface of the pouch 10 from being damaged from a sharp bead of the welded portion.

The thermal insulator 20 may include any one material selected from the group consisting of foamed synthetic resin, glass fiber, rock wool, mica, perlite, vermiculite, and cellulose. However, the thermal insulator 20 is not limited thereto and any material may be used as long as the thermal insulator can exhibit thermal insulation performance.

When the thermal insulator 20 is the thermal insulating film 20, the thermal insulating film 20 may be a thermal reflective film coated with a metal thin film by a sputtering method. However, the thermal insulating film 20 is not limited thereto, and may be manufactured by any method and in any structure as long as it is capable of exhibiting thermal insulation performance.

It should be understood that the described aspects are illustrative in all respects and not restrictive, and the scope of the present disclosure will be indicated by the following claims rather than the described detailed description.

## Claims

1. A pouch battery cell comprising:
a stack-type electrode assembly;
a metal portion (41) including an electrode tab (14) connected to the electrode assembly (11) and an electrode lead (12) connected to the electrode tab (14);
a lead film (13) attached to both sides of the electrode lead (12);
a thermal insulator (20) configured to directly or indirectly cover at least a portion of a surface of a portion of the metal portion (41) between the lead film (13) and the electrode assembly (11); and
a pouch (10) configured to accommodate a portion of the metal portion (41), the electrode assembly (11), and the thermal insulator (20);
wherein the thermal insulator (20) is spaced apart from the electrode assembly (11) by 2 mm or more and 5 mm or less.

2. The pouch battery cell of claim 1, wherein the thermal insulator (20) is a thermal insulating film (20).

3. The pouch battery cell of claim 2, wherein the thermal insulating film (20) is attached to at least a portion of both surfaces of the metal portion (41).

4. The pouch battery cell of claim 3, wherein a width of the thermal insulating film (20) is greater than a width of the metal portion (41).

5. The pouch battery cell of claim 2, wherein the thermal insulating film (20) has a shape surrounding the metal portion (41) around a length direction axis of the metal portion (41).

6. The pouch battery cell of claim 1, wherein the thermal insulator (20) includes any one material selected from the group consisting of foamed synthetic resin, glass fiber, rock wool, mica, perlite, vermiculite, and cellulose.

7. The pouch battery cell of claim 2, wherein the thermal insulating film (20) is a thermal reflective film coated with a metal thin film by a sputtering method.

8. The pouch battery cell of any one of claims 1 to 7, wherein the thermal insulator (20) covers 50% or more of a surface area of the portion of the metal portion (41) between the lead film (13) and the electrode assembly (11).

9. The pouch battery cell of any one of claims 1 to 7, wherein the thermal insulator (20) is spaced apart from the lead film (13) by 2 mm or more.

10. The pouch battery cell of any one of claims 1 to 7, wherein the thermal insulator (20) covers a connection portion of the electrode tab (14) and the electrode lead (12).

## Patentansprüche

1. Pouch-Batteriezelle, umfassend:
eine Elektrodenanordnung vom Stapeltyp;
einen Metallabschnitt (41), der eine Elektrodenlasche (14), die mit der Elektrodenanordnung (11) verbunden ist, und eine Elektrodenleitung (12), die mit der Elektrodenlasche (14) verbunden ist, enthält;
einen Leitungsfilm (13), der an beiden Seiten der Elektrodenleitung (12) angebracht ist;
einen thermischen Isolator (20), der konfiguriert ist, um mindestens einen Abschnitt einer Oberfläche eines Abschnitts des Metallabschnitts (41) zwischen dem Leitungsfilm (13) und der Elektrodenanordnung (11) direkt oder indirekt abzudecken; und
einen Pouch (10), der konfiguriert ist, um einen Abschnitt des Metallabschnitts (41), die Elektrodenanordnung (11) und den thermischen Isolator (20) aufzunehmen;
wobei der thermische Isolator (20) von der Elektrodenanordnung (11) um 2 mm oder mehr und 5 mm oder weniger beabstandet ist.

2. Pouch-Batteriezelle nach Anspruch 1, wobei der thermische Isolator (20) ein thermischer Isolierfilm (20) ist.

3. Pouch-Batteriezelle nach Anspruch 2, wobei der thermische Isolierfilm (20) an mindestens einem Abschnitt beider Oberflächen des Metallabschnitts (41) angebracht ist.

4. Pouch-Batteriezelle nach Anspruch 3, wobei eine Breite des thermischen Isolierfilms (20) größer als eine Breite des Metallabschnitts (41) ist.

5. Pouch-Batteriezelle nach Anspruch 2, wobei der thermische Isolierfilm (20) eine Form aufweist, die den Metallabschnitt (41) um eine Längsachse des Metallabschnitts (41) umgibt.

6. Pouch-Batteriezelle nach Anspruch 1, wobei der thermische Isolator (20) ein beliebiges Material enthält, das aus der Gruppe ausgewählt ist, die aus geschäumtem Kunstharz, Glasfaser, Steinwolle, Glimmer, Perlit, Vermiculit und Cellulose besteht.

7. Pouch-Batteriezelle nach Anspruch 2, wobei der thermische Isolierfilm (20) ein thermischer Reflexionsfilm ist, der mit einem dünnen Metallfilm durch ein Sputterverfahren beschichtet ist.

8. Pouch-Batteriezelle nach einem der Ansprüche 1 bis 7, wobei der thermische Isolator (20) 50 % oder mehr einer Oberfläche des Abschnitts des Metallabschnitts (41) zwischen dem Leitungsfilm (13) und der Elektrodenanordnung (11) abdeckt.

9. Pouch-Batteriezelle nach einem der Ansprüche 1 bis 7, wobei der thermische Isolator (20) von dem Leitungsfilm (13) um 2 mm oder mehr beabstandet ist.

10. Pouch-Batteriezelle nach einem der Ansprüche 1 bis 7, wobei der thermische Isolator (20) einen Verbindungsabschnitt der Elektrodenlasche (14) und der Elektrodenleitung (12) abdeckt.

## Revendications

1. Cellule de batterie de type pouch comprenant :
un ensemble d'électrodes de type à empilement ;
une partie métallique (41) comprenant une languette d'électrode (14) reliée à l'ensemble d'électrodes (11), et un conducteur d'électrode (12) connecté à la languette d'électrode (14) ;
un film conducteur (13) fixé aux deux côtés du conducteur de l'électrode (12) ;
un isolant thermique (20) configuré pour recouvrir directement ou indirectement au moins une partie d'une surface d'une partie de la partie métallique (41) entre le film conducteur (13) et l'ensemble d'électrodes (11) ; et
une poche (10) configurée pour accueillir une partie de la partie métallique (41), l'ensemble d'électrodes (11) et l'isolant thermique (20) ;
l'isolant thermique (20) étant espacé de 2 mm ou davantage et de 5 mm ou moins de l'ensemble d'électrodes (11) .

2. Cellule de batterie de type Pouch selon la revendication 1, l'isolant thermique (20) étant un film d'isolant thermique (20).

3. Cellule de batterie de type Pouch selon la revendication 2, le film d'isolant thermique (20) étant fixé sur au moins une partie des deux surfaces de la partie métallique (41).

4. Cellule de batterie de type Pouch selon la revendication 3, la largeur du film d'isolant thermique (20) étant supérieure à la largeur de la partie métallique (41).

5. Cellule de batterie de type Pouch selon la revendication 2, le film d'isolant thermique (20) ayant une forme entourant la partie métallique (41) autour d'un axe dans le sens de la longueur de la partie métallique (41).

6. Cellule de batterie de type Pouch selon la revendication 1, l'isolant thermique (20) comprenant un matériau quelconque parmi ceux du groupe composé des suivants: résine synthétique alvéolaire, fibre de verre, laine de roche, mica, perlite, vermiculite et cellulose.

7. Cellule de batterie de type Pouch selon la revendication 2, le film isolant thermique (20) étant un film thermo-réfléchissant recouvert d'un film mince métallique par pulvérisation.

8. Cellule de batterie de type Pouch selon une quelconque des revendications 1 à 7, l'isolant thermique (20) couvrant 50 % ou davantage d'une superficie de la partie de la partie métallique (41) entre le film conducteur (13) et l'ensemble d'électrodes (11).

9. Cellule de batterie de type Pouch selon une quelconque des revendications 1 à 7, l'isolant thermique (20) étant espacé du film conducteur (13) de 2 mm ou davantage.

10. Cellule de batterie de type Pouch selon une quelconque des revendications 1 à 7, l'isolant thermique (20) couvrant une partie de connexion de la languette d'électrode (14) et du conducteur d'électrode (12).
